# FASCICULE DE BREVET EUROPEEN

(11) **EP 3 689 446 B1**
(45) Date de publication et mention de la délivrance du brevet: **11.08.2021**
(21) Numéro de dépôt: 20151586.3
(22) Date de dépôt: 14.01.2020
(51) Int. Cl.: B01F 3/02, B01F 3/20, B01F 5/04

(54) **DIFFUSEUR D'AMMONIAC**
AMMONIAK-DIFFUSOR
AMMONIA DIFFUSER

(30) Priorité: 31.01.2019 FR 1900970
(43) Date de publication de la demande: 05.08.2020
(73) Titulaire: RENAULT s.a.s., 92100 Boulogne-Billancourt (FR)
(72) Inventeur: Dubarry, Maxime, 75013 PARIS (FR)

(56) Documents cités:
- EP-A1- 1 975 381
- DE-A1-102017 201 779
- FR-A1- 3 004 755
- US-A1- 2003 213 234
- US-A1- 2010 170 229

## Description

L'objet de la présente invention se rapporte à la réduction catalytique sélective des oxydes d'azote contenus dans des gaz d'échappement d'un moteur à combustion interne.

De nombreux moteurs à combustion interne, diesel notamment, émettent des gaz d'échappement qui contiennent une quantité importante d'oxydes d'azote (NOx), ces gaz d'échappement circulant dans des lignes d'échappement. Toutefois, la concentration de ces oxydes d'azote doit, en sortie des lignes d'échappement, être la plus faible possible pour éviter leur rejet dans l'atmosphère.

Ainsi, les lignes d'échappement, situées en aval des moteurs, comprennent généralement un catalyseur de réduction sélective des oxydes d'azote (ou : catalyseur SCR) qui peut être filtrant et qui permet de réduire les oxydes d'azote présents dans les gaz d'échappement en molécules suffisamment inoffensives. Pour permettre cette réduction, on injecte actuellement en amont du catalyseur SCR un liquide réducteur à base d'urée, par exemple de l'Adblue®, ce liquide réducteur comprenant un composé précurseur de l'ammoniac (NH₃) afin qu'une réaction chimique de réduction se fasse avec les oxydes d'azote dans le catalyseur SCR.

Pour garantir une bonne diffusion du réducteur dans le gaz d'échappement sur la surface d'entrée du catalyseur SCR, il faut soit introduire le réducteur bien en amont du catalyseur SCR pour permettre d'homogénéiser le mélange gaz d'échappement, réducteur, soit un mixeur ou mélangeur pour mélanger le réducteur aux gaz d'échappement avant son introduction dans le catalyseur SCR.

Des mélangeurs tels que ceux décrits dans les publications EP1975381, FR3004755, US2003/213234, DE102017201779 et US2010/170229 sont connus. Par exemple, la publication FR3004755 décrit un exemple de mélangeur destiné à être intégré dans une ligne d'échappement d'un moteur à combustion interne, en amont d'un catalyseur de réduction sélective SCR. Ce mélangeur comprend une chambre de mélange pourvue d'une entrée et d'une sortie pour permettre un écoulement des gaz d'échappement, et un orifice, communiquant avec la chambre de mélange, par lequel est injecté un liquide réducteur à base d'urée, sous forme d'un jet projeté sur des impacteurs répartis au sein de la chambre de mélange. En outre, ce mélangeur est relié à une grille chauffante disposée à la sortie de la chambre de mélange et en amont du catalyseur SCR de réduction sélective, des éléments chauffants étant intégrés à la fois dans les impacteurs et dans la grille. Toutefois, ce mélangeur manque de compacité et ne peut fonctionner qu'en présence d'impacteurs, ce qui implique un mélangeur présentant une épaisseur relativement importante. Par ailleurs, le fait que la grille chauffante soit séparée du mélangeur augmente l'encombrement axial de l'ensemble grille chauffante/mélangeur. De plus, la diffusion du liquide réducteur n'est pas optimisée et peut encore être améliorée.

La présence du mixeur, ou mélangeur, engendre par ailleurs une importante perte de charge qui induit une augmentation de la consommation du carburant utilisé pour le fonctionnement du moteur. En effet, actuellement, les pertes de charges engendrées par la présence d'un mélangeur sont de l'ordre de 20% de la perte de charge que présente la ligne d'échappement dans son ensemble. En effet, la présence d'un mixeur dans la ligne d'échappement nécessite l'apport d'une force supplémentaire afin d'expulser les gaz d'échappement de la ligne d'échappement, l'apport de cette force supplémentaire induisant une consommation additive du carburant causée par la création d'une contre pression s'opposant à l'écoulement du gaz dans la ligne d'échappement.

Il est également à noter que, pour optimiser le fonctionnement du catalyseur SCR, c'est-à-dire pour que ce dernier puisse présenter une efficacité de traitement des oxydes d'azote optimisée, il doit être porté à une température minimum d'environ 200°C. Toutefois, lors du démarrage du moteur, ce dernier n'étant pas encore en fonctionnement, cette température n'est atteinte qu'après une certaine durée à compter de l'actionnement du moteur.

Il existe donc un besoin de fournir un ensemble pour réduire les oxydes d'azote compris dans des gaz d'échappement circulant dans une ligne d'échappement palliant ces défauts, inconvénients et obstacles de l'art antérieur, en particulier d'un ensemble pour réduire les oxydes d'azote circulant dans une ligne d'échappement de moteur à combustion interne, l'ensemble permettant d'accroitre l'efficacité de traitement des oxydes d'azote du catalyseur SCR tout en assurant une compacité suffisante pour être intégré dans la ligne d'échappement dans laquelle circule des gaz d'échappement.

Pour résoudre un ou plusieurs des inconvénients cités précédemment, le premier objet de la présente invention porte sur un diffuseur pour diffuser un gaz à diffuser dans une canalisation, par exemple de l'ammoniac, ledit diffuseur se présentant sous forme d'une grille adaptée à se conformer à la paroi intérieure de la canalisation, la grille comprenant :
▪ un canal principal de distribution adapté à être connecté à un réservoir destiné à stocker le gaz à diffuser,
▪ un ou plusieurs canaux secondaires de diffusion, chacun étant relié au canal principal de distribution, les canaux secondaires de diffusion comprenant des orifices adaptés pour l'expulsion dudit gaz à diffuser de ladite grille vers la canalisation,
▪ un ou plusieurs moyens de chauffage disposés à l'intérieur des canaux secondaires de diffusion adaptés à chauffer un gaz d'échappement circulant dans ladite canalisation.

Par grille, on entend, au sens de la présente invention, un élément présentant plusieurs canaux qui s'entrecroisent.

Le canal principal de distribution est adapté pour alimenter en gaz à diffuser les canaux secondaires de distribution. Par exemple, le canal principal de distribution peut présenter un diamètre compris entre 4 et 40 millimètres.

Les orifices sont, de préférence, positionnés régulièrement sur chacun des canaux secondaires de diffusion afin de permettre la diffusion du gaz à diffuser sur toute une section de la canalisation. Par exemple, les orifices peuvent être espacés les uns des autres d'une distance comprise entre 4 et 50 millimètres, la distance étant mesurée entre chacun des centres des orifices les plus proches. Ces orifices peuvent, par exemple, présenter un diamètre compris entre 1 et 20 millimètres. Le diffuseur est alors adapté pour diffuser des particules fines de gaz sur toute la surface de la section de la canalisation. Ces orifices peuvent être traversant. Cependant, de préférence, ces orifices ne sont présents que sur un même côté des canaux secondaires de diffusion de manière que la diffusion du gaz dans la canalisation via le diffuseur ne s'oppose pas à l'écoulement d'un gaz circulant dans la canalisation dans lequel on souhaite diffuser le gaz via le diffuseur. Ainsi, les sens d'écoulement du gaz à diffuser et du gaz circulant dans la canalisation sont les mêmes afin d'éviter la création d'une contre pression s'opposant à l'écoulement du gaz dans la canalisation.

Les moyens de chauffage situés à l'intérieur des canaux secondaires, par exemple une résistance électrique, permettent de réchauffer le gaz circulant dans la canalisation, par exemple les gaz d'échappement, à leur passage à travers la grille, pour permettre d'avoir la température nécessaire aux réactions chimiques de réduction au sein d'un catalyseur SCR disposé en aval du diffuseur.

De préférence, la grille peut être circulaire de manière que le diffuseur puisse se conformer à une canalisation de section circulaire. Par exemple, le diamètre de cette grille circulaire peut être compris entre 50 et 1000 millimètres.

Lorsque la grille est circulaire, le canal principal de distribution peut être, de préférence, disposé selon un diamètre de la grille. De cette manière, deux des points les plus éloignés du diffuseur sont reliés de manière à alimenter en gaz à diffuser tous les canaux secondaires de diffusion.

Lorsque la grille est circulaire et le canal principal de distribution est disposé selon le diamètre de la grille, les canaux secondaires de diffusion peuvent être, de préférence, disposés perpendiculairement au canal principal de distribution. Par exemple, la grille peut comprendre entre 5 et 100 canaux secondaires de diffusion, chacun étant espacé d'une distance comprise entre 5 et 30 millimètres. De cette façon, on garantit une diffusion du gaz à diffuser sur une grande partie de la surface de la section de la canalisation dans laquelle on souhaite diffuser le gaz à l'aide du diffuseur.

Lorsque la grille est circulaire, le canal principal de distribution peut être, de préférence, disposé selon le périmètre de la grille, de manière à éviter de perturber le flux de gaz d'échappement en son centre. Il est aussi possible de prévoir un diamètre du canal principal qui soit plus important que le conduit de gaz d'échappement afin d'être le plus transparent possible.

Lorsque la grille est circulaire et le canal principal de distribution est disposé selon le périmètre de la grille, les canaux secondaires de diffusion peuvent être, de préférence, disposés perpendiculairement à un diamètre de la grille de sorte que chacune des extrémités des canaux secondaires de diffusion est reliée au canal principal de distribution.

La section du canal secondaire de diffusion peut être de toute forme, circulaire, rectangulaire, etc.

Toutefois, de préférence, les canaux secondaires peuvent présenter une section triangulaire. De cette façon, on améliore la turbulence et le mélange entre le gaz circulant dans la canalisation et le gaz à diffuser à l'aide du diffuseur.

De préférence, le diffuseur peut présenter une épaisseur comprise entre 60 et 80 mm de manière à pouvoir être intégré dans un petit volume d'une canalisation. Cette épaisseur inclut l'épaisseur de l'élément lui-même et la distance entre l'aval de l'élément jusqu'à l'entrée du catalyseur SCR.

Un deuxième objet selon l'invention porte sur un ensemble pour réduire les oxydes d'azote circulant dans une ligne d'échappement de moteur à combustion interne, la ligne d'échappement comprenant un catalyseur de réduction sélective des oxydes d'azote, l'ensemble comprenant :
- un diffuseur défini comme indiqué ci-avant, et
- un réservoir comprenant de l'ammoniac et étant relié au canal principal de distribution.

Un tel ensemble présente l'avantage de combiner à la fois la fonction d'un injecteur d'urée liquide précurseur d'ammoniac et celle d'un mélangeur, comme c'est le cas dans les ensembles utilisés actuellement. Ainsi, on réduit l'encombrement engendré par la présence du mélangeur et de l'injecteur liquide en présentant un diffuseur adapté à associer les fonctions du mélangeur et de l'injecteur d'urée liquide. De plus, le diffuseur étant adapté à diffuser des particules fines d'ammoniac sur toute la surface de la section de la ligne d'échappement, ces particules d'ammoniac sont également adaptés à s'intégrer sur toute la surface du catalyseur SCR qui comprend généralement une enveloppe faisant partie intégrante de la ligne d'échappement une fois assemblée à celle-ci, et un substrat. Cette intégration s'effectue, dans ce cas, sur toute la surface du substrat situé en aval du diffuseur au regard du sens d'écoulement des oxydes d'azote compris dans le gaz d'échappement circulant dans la ligne d'échappement.

De plus, en s'affranchissant de la présence à la fois de l'injecteur d'urée liquide et du mélangeur, on gagne en compacité de sorte à permettre l'installation de l'injecteur au plus proche du catalyseur SCR, et notamment de son substrat. Par ailleurs, il est à noter que la mise en place du diffuseur dans la ligne d'échappement est facilitée par rapport à la mise en place de l'injecteur d'urée liquide et du mélangeur.

Un tel ensemble permet également de réduire les pertes de charges globales dues à la présence notamment d'un mélangeur dans les ensembles actuellement utilisés. En effet, actuellement les mélangeurs utilisés permettent la création d'un gaz d'échappement présentant des mouvements aérodynamiques afin d'augmenter la distance parcourue et ainsi le temps de mélange entre le gaz d'échappement et l'ammoniac issu de l'urée liquide. Ce besoin de mélanger le gaz d'échappement et l'urée liquide est réduit par la présence du diffuseur qui permet une répartition directe de l'ammoniac sur toute la surface du substrat du catalyseur SCR. Par ailleurs, cette réduction des pertes de charge est due au fait que l'effort pour expulser les gaz d'échappement circulant dans la ligne d'échappement est amoindrie.

De préférence, l'ensemble peut comprendre en outre un moyen régulateur adapté à réguler le débit d'alimentation d'ammoniac du diffuseur. À l'aide d'un tel moyen régulateur, il est possible notamment de couper l'alimentation en ammoniac du diffuseur pour ainsi éviter que de l'ammoniac soit émis vers l'atmosphère. Par exemple, le moyen régulateur peut être une vanne, un boisseau ou toute autre commande permettant de réduire le débit d'agent réducteur.

De préférence, l'ensemble peut comprendre en outre une pompe disposée entre le réservoir et le moyen régulateur. À l'aide de cette pompe, il est alors possible de maintenir le débit d'alimentation en ammoniac du diffuseur à une valeur prédéfinie.

Dans un mode de réalisation, le canal principal de distribution peut être disposé verticalement dans la ligne d'échappement.

Un troisième objet selon l'invention porte sur un véhicule comprenant l'ensemble défini ci-avant.

L'invention sera mieux comprise à la lecture de la description qui suit, faite uniquement à titre d'exemple, et en référence aux figures en annexe dans lesquelles :
- la figure 1 représente un ensemble selon un mode préféré de réalisation de l'invention,
- la figure 2 représente une surface d'un diffuseur selon un premier mode préféré de réalisation selon l'invention, et
- la figure 3 représente une vue en coupe d'un canal secondaire de diffusion de section triangulaire.

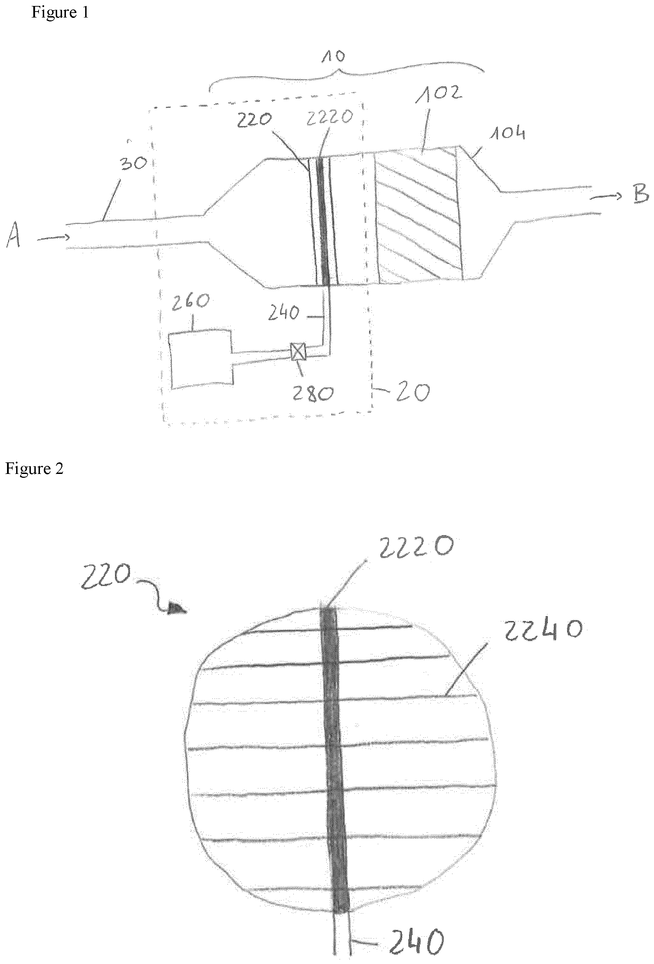

La figure 1 illustre un ensemble 20 pour réduire les oxydes d'azote circulant dans une ligne d'échappement 30 d'un moteur à combustion interne (non illustré dans les figures) d'un véhicule automobile. Les oxydes d'azote sont compris dans les gaz d'échappement en provenance du moteur à combustion interne. Les oxydes d'azote circulent du point A vers le point B dans la ligne d'échappement 30, le point A étant relié au moteur à combustion interne et le point B étant relié à l'atmosphère.

La ligne d'échappement 30 comprend un catalyseur 10 de réduction sélective des oxydes d'azote. Le catalyseur 10 peut être n'importe quel catalyseur SCR connu de l'homme du métier et pouvant être utilisé dans le domaine automobile. Par exemple, le catalyseur 10 peut se présenter sous la forme de manière connue en soi et comprendre un substrat 102 qui peut être un monolithe céramique imprégné, le substrat 102 étant logé dans une enveloppe 104 qui peut être métallique et de forme cylindrique par exemple.

L'ensemble 20 est constitué d'un diffuseur 220 et d'un réservoir 260 comprenant de l'ammoniac. Le diffuseur 220 est un diffuseur chauffant et est installé en amont du catalyseur 10, en particulier dans l'enveloppe 104 du catalyseur 10. Il est à noter qu'aucun coude ou tout autre obstacle n'est présent entre le diffuseur 220 et l'entrée du catalyseur 10. Le diffuseur 220 présente une épaisseur comprise entre 60 et 80 mm de manière à avoir des dimensions similaires à celles des mixeurs d'urée utilisés actuellement.

Le diffuseur 220 et relié au réservoir 260 par l'intermédiaire d'un canal d'alimentation 240. Le diffuseur 220 permet une diffusion de l'ammoniac, dans la ligne d'échappement 30 et en particulier dans l'enveloppe 104 en amont du substrat 102 du catalyseur 10 et proche de ce dernier. Le diffuseur 220 se présente sous forme d'une grille adaptée à se conformer à la paroi intérieure de l'enveloppe 104 du catalyseur 10 qui se présente ici sous forme cylindrique. Le diffuseur 220 présente une section circulaire adapté à se conformer à l'intérieur de l'enveloppe 104 du catalyseur 10, le diffuseur 220 présentant alors une grille circulaire. Par exemple, le diamètre de cette grille circulaire est environ égal à 173 millimètres.

Par ailleurs, il est à noter que le diffuseur 220 se présentant sous la forme d'une grille comprend :
▪ un canal principal de distribution 2220 connecté au canal d'alimentation 240,
▪ plusieurs canaux secondaires de diffusion 2240 comprenant des orifices 2246 adaptés pour l'expulsion de l'ammoniac circulant dans les canaux secondaires de diffusion 2240, chacun de ces canaux secondaires de diffusion 2240 étant relié au canal principal de distribution 2220, et
▪ plusieurs moyens de chauffage 2242 disposés à l'intérieur des canaux secondaires de diffusion 2240 adaptés à chauffer les gaz d'échappement circulant dans la ligne d'échappement 30, et en particulier dans l'enveloppe 104 du catalyseur 10.

Il est à noter que le diffuseur 220 peut être fabriqué indépendamment du reste du catalyseur 10 de sorte que le diffuseur 220 puisse être encastré ultérieurement dans l'enveloppe 104 du catalyseur 10. Par exemple, pour fixer le diffuseur 220 à l'enveloppe 104 du catalyseur 10, on peut prévoir un vissage externe sur l'enveloppe 104 du catalyseur 10 et la mise en place d'un tube à l'aplomb du canal de distribution principal 2220 auquel sera relié à la fois le canal principal de distribution 2220 et le canal d'alimentation 240 pour alimenter le diffuseur 220 en ammoniac. Par exemple, ce tube peut déboucher à l'extrémité inférieure du canal principal de distribution 2220. Peuvent également déboucher deux points pour connecter électriquement les moyens de chauffages 2242 comme on peut le retrouver sur des grilles chauffantes classiques de l'état de la technique.

Comme indiqué sur la figure 2, en particulier, le canal principal de distribution 2220 est disposé verticalement et une pluralité de canaux secondaires de diffusion 2240 sont reliés au canal principal de distribution 2220 et sont disposés perpendiculaires au canal principal de distribution 2240, sont donc horizontaux.

L'ammoniac circulant dans le canal principal de distribution 2220 est ensuite réparti dans les différents canaux secondaires de diffusion 2240.

Par exemple, les canaux secondaires de diffusion 2240 peuvent se présenter sous la forme d'une tige rectiligne à l'intérieur de laquelle est logée, sur toute sa longueur, une ligne de circulation du gaz à diffuser 2244 à l'intérieur de laquelle l'ammoniac circule à partir du canal principal de distribution 2220. Chaque tige rectiligne peut être réalisée par extrusion, avant d'être découpé à une longueur prédéfinie de manière à être encastré dans la grille pour constituer un diffuseur 220 circulaire.

Ensuite, on insère les moyens de chauffage 2242, par exemple des résistances thermiques, à l'intérieur des canaux secondaires de diffusion 2240. Les orifices 2246 peuvent être réalisés suite au perçage des canaux secondaires de diffusion 2240 en différents points afin de faire déboucher l'ammoniac gazeux au milieu des gaz d'échappement. Ensuite, on peut usiner à mi- longueur chaque tige rectiligne afin de pouvoir encastrer la ligne de circulation du gaz à diffuser 2244 qui permet d'alimenter les canaux secondaires de diffusion 2240.

Chaque tige rectiligne contenant les lignes de circulation du gaz à diffuser 2244 sont ensuite assemblées suivant un ordre précis pour constituer un cercle comprenant le long de son diamètre le canal principal de distribution 2220. Chacune des tiges rectilignes peut ensuite être encastrée ou tenue avec des points de soudure directement dans l'enveloppe 104 du catalyseur 10 de manière à être solidaire du catalyseur 10. Le canal principal de distribution 2220 permet d'alimenter en ammoniac chacun des canaux secondaires de diffusion 2240.

Par exemple, comme indiqué sur la figure 2, la grille peut comprendre sept canaux secondaires de diffusion 2240, chacun étant espacé d'une distance environ égale à 22 millimètres. De cette façon, on garantit une diffusion du gaz à diffuser sur une grande partie de la surface de la section de la ligne d'échappement 30 dans laquelle on souhaite diffuser l'ammoniac.

En outre chaque canal secondaire de diffusion 2240 comprend les orifices 2246 qui peuvent par exemple être répartis régulièrement sur toute la longueur du canal secondaire de diffusion 2240 de manière à permettre l'expulsion de l'ammoniac dans l'enveloppe 104 métallique pour être mélanger au gaz d'échappement avant que ce mélange ne soit introduit dans le substrat 102 du catalyseur 10. Il est à noter que le nombre d'orifices dépend de la quantité et de la pression d'ammoniac à injecter dans l'enveloppe 104 du catalyseur 10.

Par exemple, chacun de ces orifices 2246 peut être espacé d'une distance environ égale à 10 millimètres, la distance étant mesurée entre les centres des orifices 2246 les plus proches. Ces orifices 2246 présentent un diamètre environ égal 4 millimètres. Ces orifices 2246 ne sont présents que sur un même côté des canaux secondaires de diffusion 2240 de manière que la diffusion d'ammoniac dans la l'enveloppe 104 du catalyseur 10 via le diffuseur 220 ne s'oppose pas à l'écoulement des gaz d'échappement circulant dans la ligne d'échappement 30.

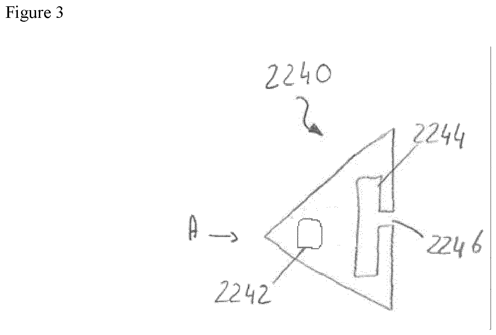

Il est à noter que, dans ce mode de réalisation, la section d'un canal secondaire de diffusion 2240 est de forme triangulaire comme indiqué sur la figure 3 qui illustre un canal secondaire de diffusion 2240 présentant une section triangulaire dans un plan contenant un orifice 2246. Dans cette figure 3, on observe également une ligne de circulation du gaz à diffuser 2244 reliée à l'orifice 2246 pour l'injection du gaz à diffuser dans la ligne d'échappement 30. Ainsi, on réduit les pertes de charge dues au fait que l'effort pour expulser les gaz d'échappement circulant dans la ligne d'échappement 30 est amoindrie. Ainsi, on a une consommation de carburant amoindrie dans les proportions de cette réduction de perte de charges.

Par exemple, le réservoir 260 comprenant l'ammoniac peut être sous pression et peut comprendre un sel solide chargé d'ammoniac, dont la libération sous forme gazeuse est provoquée par un chauffage électrique du réservoir 260. Un tel système est notamment proposé par la société FAURECIA et commercialisé sous la dénomination système ASDS pour système *« Ammonia Storage and Delivery System »* en anglais. Un tel système de délivrance d'ammoniac gazeux est aussi décrit de manière détaillée dans la référence brevet EP2428490 qui divulgue l'utilisation d'un matériau solide qui permet un stockage dense et réversible de l'ammoniac, avec un temps de réponse court pour la désorption de l'ammoniac. Par exemple, des sels alcalino-terreux tels que SrCl₂, BaCL₂ ou MgCl₂ peuvent être utilisés, ces sels de poudre étant ensuite incorporés à du graphite expansé puis compactés formant une matrice composite poreuse qui permet un stockage réversible du gaz ammoniac. Ainsi, il est possible d'alimenter le diffuseur 220 à partir d'un réservoir 260 comprenant des sels renfermant tout le stock d'ammoniac nécessaire au fonctionnement du catalyseur 10, ce réservoir 260 de sels étant chauffé en totalité par une résistance, et délivrant alors de l'ammoniac gazeux.

L'ensemble 20 comprend en outre une vanne comme moyen régulateur 280 de manière à réguler le débit d'alimentation d'ammoniac du diffuseur 220. À l'aide d'un tel moyen régulateur 280, il est possible notamment de couper l'alimentation en ammoniac du diffuseur 220 et éviter les fuites de ce gaz toxique vers l'atmosphère.

L'ensemble 20 comprend en outre une pompe (non illustré dans les figures) pouvant être disposée entre le réservoir 260 et le moyen régulateur 280. Étant donné que l'ammoniac, avant d'être diffusé dans la ligne d'échappement 30, est sous pression, cette pompe permet de maintenir le débit d'alimentation en ammoniac du diffuseur 220 à une valeur prédéfinie en fonction de la quantité d'ammoniac à diffuser dans la ligne d'échappement 30 notamment. Par exemple, ce débit peut être maintenu à une valeur environ égale à 350 mg/s. Suivant la concentration souhaitée d'ammoniac à injecter, la pompe peut être adaptée.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

Par exemple, dans une variante de réalisation, le canal principal de distribution 2220 peut être disposé selon le périmètre de la grille plutôt que selon son diamètre. Les canaux secondaires de diffusion 2240 peuvent alors être disposés perpendiculairement à un diamètre de la grille de sorte que chacune des extrémités des canaux secondaires de diffusion 2240 est reliée au canal principal de distribution 2220.

Dans les revendications, le mot « comprenant » n'exclut pas d'autres éléments et l'article indéfini « un/une » n'exclut pas une pluralité.

## Revendications

1. Un diffuseur (220) pour diffuser un gaz à diffuser dans une canalisation, ledit diffuseur (220) se présentant sous forme d'une grille adaptée à se conformer à la paroi intérieure de ladite canalisation, ladite grille comprenant :
▪ un canal principal de distribution (2220) adapté à être connecté à un réservoir (260) destiné à stocker ledit gaz à diffuser,
▪ un ou plusieurs canaux secondaires de diffusion (2240), chacun étant relié audit canal principal de distribution (2220), lesdits canaux secondaires de diffusion (2240) comprenant des orifices (2246) adaptés pour l'expulsion dudit gaz à diffuser de ladite grille vers ladite canalisation,
▪ un ou plusieurs moyens de chauffage (2242) disposés à l'intérieur desdits canaux secondaires de diffusion (2240) adaptés à chauffer un gaz d'échappement circulant dans ladite canalisation.

2. Diffuseur (220) selon la revendication 1, selon lequel ladite grille est circulaire.

3. Diffuseur (220) selon la revendication 2, selon lequel ledit canal principal de distribution (2220) est disposé selon un diamètre de ladite grille.

4. Diffuseur (220) selon la revendication 3, selon lequel lesdits canaux secondaires de diffusion (2240) sont disposés perpendiculairement audit canal principal de distribution (2220).

5. Diffuseur (220) selon la revendication 2, selon lequel ledit canal principal de distribution (2220) est disposé selon le périmètre de ladite grille.

6. Diffuseur (220) selon la revendication 5, selon lequel lesdits canaux secondaires de diffusion (2240) sont disposés perpendiculairement à un diamètre de ladite grille de sorte que chacune des extrémités desdits canaux secondaires de diffusion (2240) est reliée audit canal principal de distribution (2220).

7. Diffuseur (220) selon l'une quelconque des revendications 1 à 6, selon lequel lesdits canaux secondaires présentent une section triangulaire.

8. Diffuseur (220) selon l'une quelconque des revendications 1 à 7, présentant une épaisseur comprise entre 60 et 80 mm.

9. Ensemble (20) pour réduire les oxydes d'azote circulant dans une ligne d'échappement (30) de moteur à combustion interne, ladite ligne d'échappement (30) comprenant un catalyseur (10) de réduction sélective des oxydes d'azote, ledit ensemble (20) comprenant :
- un diffuseur (220) défini selon l'une quelconque des revendications 1 à 8, et
- un réservoir (260) comprenant de l'ammoniac et étant relié audit canal principal de distribution (2220).

10. Ensemble (20) selon la revendication 9, comprenant en outre un moyen régulateur (280) adapté à réguler le débit d'alimentation d'ammoniac dudit diffuseur (220).

11. Ensemble (20) selon les revendications 9 ou 10, comprenant en outre une pompe disposée entre ledit réservoir (260) et ledit moyen régulateur (280).

12. Ensemble (20) selon l'une quelconque des revendications 9 à 11, selon lequel ledit canal principal de distribution (2220) est disposé verticalement dans ladite ligne d'échappement (30).

13. Véhicule comprenant un ensemble (20) selon l'une quelconque des revendications 9 à 12.

## Patentansprüche

1. Diffusor (220) zum Ausbreiten eines in einer Rohrleitung auszubreitenden Gases, wobei der Diffusor (220) die Form eines Gitters aufweist, das dazu eingerichtet ist, sich an die Form der Innenwand der Rohrleitung anzupassen, wobei das Gitter umfasst:
▪ einen Hauptverteilungskanal (2220), der dazu eingerichtet ist, mit einem Behälter (260) verbunden zu werden, der dazu bestimmt ist, das auszubreitende Gas zu speichern,
▪ einen oder mehrere sekundäre Ausbreitungskanäle (2240), von denen jeder mit dem Hauptverteilungskanal (2220) verbunden ist, wobei die sekundären Ausbreitungskanäle (2240) Öffnungen (2246) umfassen, die zum Ausstoßen des auszubreitenden Gases aus dem Gitter in Richtung der Rohrleitung eingerichtet sind,
▪ ein oder mehrere im Inneren der sekundären Ausbreitungskanäle (2240) angeordnete Erwärmungsmittel (2242), die dazu eingerichtet sind, ein in der Rohrleitung strömendes Abgas zu erwärmen.

2. Diffusor (220) nach Anspruch 1, wobei das Gitter kreisförmig ist.

3. Diffusor (220) nach Anspruch 2, wobei der Hauptverteilungskanal (2220) entlang eines Durchmessers des Gitters angeordnet ist.

4. Diffusor (220) nach Anspruch 3, wobei die sekundären Ausbreitungskanäle (2240) senkrecht zum Hauptverteilungskanal (2220) angeordnet sind.

5. Diffusor (220) nach Anspruch 2, wobei der Hauptverteilungskanal (2220) entlang des Umfangs des Gitters angeordnet ist.

6. Diffusor (220) nach Anspruch 5, wobei die sekundären Ausbreitungskanäle (2240) senkrecht zu einem Durchmesser des Gitters angeordnet sind, so dass jedes der Enden der sekundären Ausbreitungskanäle (2240) mit dem Hauptverteilungskanal (2220) verbunden ist.

7. Diffusor (220) nach einem der Ansprüche 1 bis 6, wobei die sekundären Kanäle einen dreieckigen Querschnitt aufweisen.

8. Diffusor (220) nach einem der Ansprüche 1 bis 7, welcher eine Dicke zwischen 60 und 80 mm aufweist.

9. Anordnung (20) zum Reduzieren der Stickoxide, die in einer Abgasleitung (30) einer Brennkraftmaschine strömen, wobei die Abgasleitung (30) einen Katalysator (10) zur selektiven Reduktion der Stickoxide umfasst, wobei die Anordnung (20) umfasst:
- einen Diffusor (220), der gemäß einem der Ansprüche 1 bis 8 definiert ist, und
- einen Behälter (260), der Ammoniak enthält und mit dem Hauptverteilungskanal (2220) verbunden ist.

10. Anordnung (20) nach Anspruch 9, welche außerdem ein Regelmittel (280) umfasst, das dazu eingerichtet ist, die Zuflussmenge von Ammoniak zum Diffusor (220) zu regeln.

11. Anordnung (20) nach den Ansprüchen 9 oder 10, welche außerdem eine Pumpe umfasst, die zwischen dem Behälter (260) und dem Regelmittel (280) angeordnet ist.

12. Anordnung (20) nach einem der Ansprüche 9 bis 11, wobei der Hauptverteilungskanal (2220) vertikal in der Abgasleitung (30) angeordnet ist.

13. Fahrzeug, welches eine Anordnung (20) nach einem der Ansprüche 9 bis 12 umfasst.

## Claims

1. Diffuser (220) for diffusing a gas that is to be diffused in a duct, said diffuser (220) in the form of a grid that is able to match the shape of the internal wall of said duct, said grid comprising:
▪ a main distribution line (2220) that can be connected to a reservoir (260) intended for storing said gas that is to be diffused,
▪ one or more secondary diffusion lines (2240), each one being connected to said main distribution line (2220), said secondary diffusion lines (2240) comprising orifices (2246) that are suitable for expelling said gas that is to be diffused from said grid towards said duct,
▪ one or more heating means (2242) arranged inside said secondary diffusion lines (2240) and capable of heating an exhaust gas flowing in said duct.

2. Diffuser (220) according to Claim 1, according to which said grid is circular.

3. Diffuser (220) according to Claim 2, according to which said main distribution line (2220) is arranged across a diameter of said grid.

4. Diffuser (220) according to Claim 3, according to which said secondary diffusion lines (2240) are arranged perpendicular to said main distribution line (2220).

5. Diffuser (220) according to Claim 2, according to which said main distribution line (2220) is arranged along the perimeter of said grid.

6. Diffuser (220) according to Claim 5, according to which said secondary diffusion lines (2240) are arranged perpendicular to a diameter of said grid in such a way that each of the ends of said secondary diffusion lines (2240) is connected to said main distribution line (2220) .

7. Diffuser (220) according to any one of Claims 1 to 6, according to which said secondary lines have a triangular cross section.

8. Diffuser (220) according to any one of Claims 1 to 7, having a thickness of between 60 and 80 mm.

9. Assembly (20) for reducing nitrous oxides flowing in an exhaust pipe (30) of an internal combustion engine, said exhaust pipe (30) comprising a catalytic converter (10) for selective reduction of nitrous oxides, said assembly (20) comprising:
- a diffuser (220) defined according to any one of Claims 1 to 8, and
- a reservoir (260) containing ammonia and connected to said main distribution line (2220).

10. Assembly (20) according to Claim 9, further comprising a regulator means (280) that is capable of regulating the feed flow rate of ammonia of said diffuser (220) .

11. Assembly (20) according to Claim 9 or 10, further comprising a pump arranged between said reservoir (260) and said regulator means (280).

12. Assembly (20) according to any one of Claims 9 to 11, according to which said main distribution line (2220) is arranged vertically in said exhaust pipe (30).

13. Vehicle comprising an assembly (20) according to any one of Claims 9 to 12.
